# EUROPEAN PATENT APPLICATION

(11) **EP 2 283 793 A1**
(43) Date of publication of application: **16.02.2011**
(21) Application number: 10171745.2
(22) Date of filing: 03.08.2010
(51) Int. Cl.: A61C 8/00

(54) **Dental impant**

(30) Priority: 13.08.2009 IT GE20090064
(71) Applicant: Rebaudi, Alberto, 16146 Genova (IT)
(72) Inventor: Rebaudi, Alberto, 16146 Genova (IT)
(74) Representative: Porsia, Attilio

(57) **Abstract**

Dental implant (1), comprising a substantially frustoconical shaped screw-like head (2) provided with a series of self-tapping threads (102) and able to be inserted and screwed into a corresponding substantially frustoconical seat (8) formed in the bone (6) of the patient; a collar (4) is formed on the larger-base end of said head (2) and the smaller-base end thereof is provided with a substantially cylindrical shank (5) which is coaxial with said screw-like head (2) and provided with a series of annular grooves (105); said cylindrical shank (5) is able to be inserted inside a corresponding substantially cylindrical seat (7) formed in the bone (6) of the patient, coaxially and below said substantially frustoconical seat (8).

## Description

The present invention relates to dental implants.

As is known, when carrying out dental implants, seats are prepared surgically by perforating the alveolar bone so that the implants can then be fixed in the upper jawbone or mandible of the patient in predetermined positions. Drilling operations are firstly performed on the patient's bone using a special drill or osteotome or sonic/ultrasonic vibrating instrument with the aim of forming the seats which are to be machined subsequently ready for insertion of the dental implant. Mounting of these dental implants (usually they consist of threaded screws) often proves to be long and complex, in particular owing to the fact that, when inserted, these implants engage inside the site prepared in the bone with their screw thread in such a way that they are not situated level with the bone crest. Moreover, the torsional forces involved during insertion vary depending on the quality of the bone and are often notable to the point of causing damage due to compression of the bone during the insertion manoeuvres.

The object of the present invention is to provide a dental implant which, during insertion in the upper jawbone or mandible of the patient, is already situated level with the bone crest or in the vicinity thereof before starting the screwing operations for fixing thereof and which, regardless of the bone quality and density, is completely inserted downwards with a predetermined torsional force and with relatively few degrees of twist fully engages with the bone, ensuring greater stability without excessive bone compression and therefore with less damage to the bone (fractures, microfissures and bone deformation) and an improved quality of the dental implant.

This object is achieved by the present invention by means of a dental implant, **characterized in that** it comprises a screw-like head with a substantially frustoconical shape, which is provided with a series of self-tapping threads and is able to be inserted and screwed into a corresponding substantially frustoconical seat formed in the patient's bone; a collar is formed on the larger-base end of this head and the smaller-base end thereof is provided with a substantially cylindrical shank which is coaxial with said screw-like head and provided with a series of annular grooves; this cylindrical shank is able to be inserted inside a corresponding substantially cylindrical seat which is formed in the patient's bone coaxially and underneath this frustoconical seat.

Further objects and advantages of the present invention will emerge more clearly from the following description provided by way of a non-limiting example and with reference to the accompanying drawings in which:
- Fig. 1 shows a side elevation view of a dental implant according to the present invention;
- Fig. 2 shows a side elevation and cross-sectional view of a patient's bone which may be the upper jawbone or mandible and in which a first cylindrical seat is formed;
- Fig. 3 shows a side elevation and cross-sectional view of the bone according to Fig. 2 in which a second frustoconical seat coaxial with said first cylindrical seat is formed;
- Fig. 4 is a side elevation and cross-sectional view of the bone according to the preceding figures, which shows the present implant positioned, before screwing is started, in said cylindrical and frustoconical seats of the bone;
- Fig. 5 shows a side elevation and cross-sectional view of the bone according to the preceding figures into which the present implant has been completely screwed; and
- Figs. 6a, 6b and 6c show three examples of positions for final positioning of the present dental implant in the cases where the bone of the patient has a high density, medium density and low density, respectively.

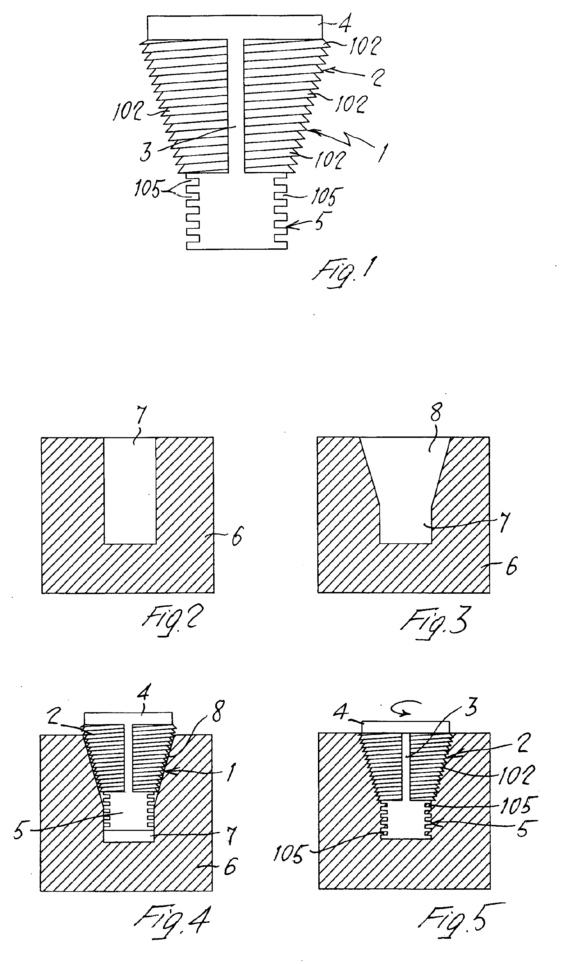

With reference to said accompanying drawings and with particular reference to Fig. 1 thereof, 1 denotes a dental implant according to the present invention. Said implant comprises a screw-like head 2 with a frustoconical shape, in which self-tapping threads 102 are formed. These threads 102 are able to penetrate into a bone of any density, and annular spaces of a certain depth are formed between each pair of successive threads with the aim of allowing bone growth between said threads and improving the distribution of the loads. Said screw-like head 2 also has, formed therein, small vertical channels 3, one of which is shown in the figures and which form a kind of serration which improves the cutting and penetrating capacity of said screw-like head 2 during the implant screwing operation. On the larger-base end, said screw-like head 2 has a collar 4 which allows the implant to be screwed into the bone by means of a suitable instrument, while on the smaller-base end said screw-like head has a cylindrical shank 5 which is coaxial with said head 2 and in which annular grooves 105 are formed. These annular grooves 105 are formed so that the outer profile of said cylindrical shank 5, viewed in axial cross-section, has substantially a sawtooth shape. The pitch of the threads 102 of the screw-like head 2 preferably varies from about 0.1 mm to about 3 mm, while the number of lead threads of the screw varies preferably from one to eight; the length of said screw-like head 2 is preferably about 5 mm, while the length of said cylindrical shank 5 varies preferably from about 2 mm to about 5 mm. Said parameters for the size of the screw-like head 2 may be chosen so as to achieve not only effective penetration of the implant inside the bone with relative small torsional forces, but also an implant with a very high primary stability.

Fig. 2 shows a section of the bone 6 of the patient, which may be the upper jawbone or mandible. A first cylindrical seat 7 is formed in this bone 6 by means of a cylindrical drill burr; the diameter of the drill burr tip coincides with the dimension of the apex of the implant. Then, based on this first cylindrical seat 7 (see Fig. 3) a second frustoconical seat 8 is formed coaxially therewith by means of a conical drill burr with a special centring guide able to widen the site inside which the implant is to be inserted.

The implant 1 is then inserted into the frustoconical seat 8 and inside the cylindrical seat 7 as shown in Fig. 4; advantageously, as may be seen, the collar 4 of the implant 1 is already practically level with the bone crest of the bone 6. It will be possible to decide, depending on the working depth of the drill, the exact level for positioning of the implant. In other words, owing to the frustoconical shaped screw-like head 2 and the corresponding conicity of the seat 8, it is possible to insert the present implant so that it is at the height of the bone crest, without screwing it in. By means of a special instrument which is applied onto the collar 4, at this point, the implant is screwed completely into the bone 6 of the patient (see Fig. 5). It should be noted, with reference to this figure, that with time the bone fills the annular grooves 105 which are formed in the cylindrical shank 5, ensuring optimum strength of the implant 1. These annular grooves 105 also have the function of rendering insertion of the implant inside the cylindrical seat 7 of the bone very simple and rapid, with a very high primary and secondary stability and anchoring power.

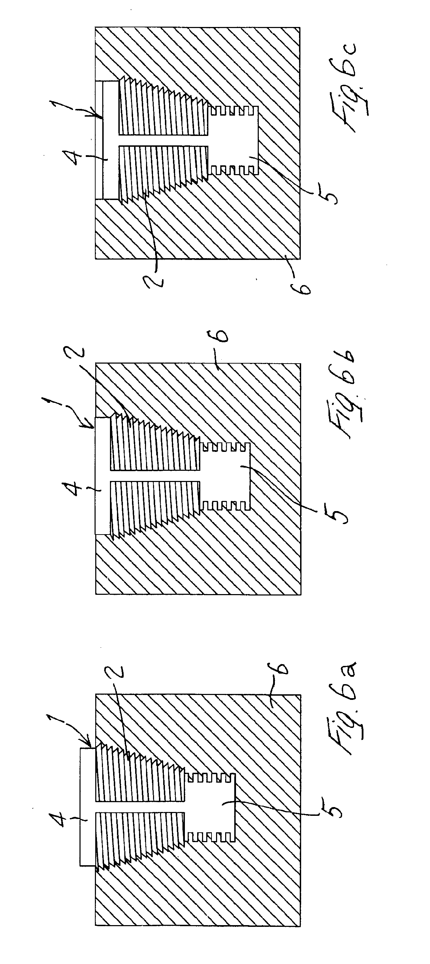

The type of positioning of the present dental implant 1 in the bone of the patient may vary depending on the type of bone density and the need to obtain a greater primary stability. In the case of a bone 6 with a high bone density (see Fig. 6a), the implant 1 will be preferably inserted into the bone, causing it to project about 1 mm from the bone crest under normal conditions. In the case of immediate stressing of the implant, the torsional screwing force may if necessary be increased by screwing down the implant to a greater depth. In the case of a bone 6 with a medium bone density (see Fig. 6b), the implant will be totally inserted, i.e. with the upper surface of the collar 4 substantially coinciding with the bone crest. In this situation also, in the event of immediate stressing of the implant, the torsional screwing force may be increased if necessary, by screwing down the implant to a greater depth. In the event of a bone 6 with a low bone density (see Fig. 6c) the implant will be inserted into the bone so that the collar 4 is positioned underneath the bone crest, with its upper surface about 0.5 mm from the bone crest. The present implant, finally, is made preferably using metallic materials such as titanium/aluminium/vanadium alloys, for example grade 5 titanium, or ceramic materials, zirconium-based materials or any other biocompatible material.

Since the implant is already level with the bone crest before the screwing operation which imparts to it the correct stability, advantageously limited rotations of the head 2 inside the corresponding seat 8 will be required. For example, if the correct stability of the implant is obtained by means of a torque of about 35 cN/m, said stability value, in the event of a soft bone with a low bone density, is obtained with a complete rotation of the head 2 inside the seat 8. In the event of a bone with a medium bone density, this stability is achieved with a half-turn of the screw and in the event of a hard bone with a high bone density, this stability is achieved with a quarter-turn of the head 2.

To summarise, the present implant offers numerous advantages including the fact of being positioned already in the corresponding seat before being screwed in, with fewer risks of contamination than the known implants. Moreover, the present implant may be stabilised with limited damage for the bone; in fact, as is known, each passing thread may result in damage for bone and, in this connection, the threads of the screw-like head 2 advantageously never pass twice through the same point since the implant reaches its final position with at the most one screw turn, as mentioned above.

Screwing-in of the present implant may be performed using a dynamometric key, with the result that the implant may be inserted in the patient's bone without causing bone compression and ischaemia of the vascular channels of the bone, since the insertion force is distributed over the entire screwable surface. For this purpose, during mounting of the implant, it is important to ensure the correct calibration between the preparation drill burr, or between the shape of the implant site prepared, and the implant. In order to achieve the correct depth and correct initial engagement between the implant and the seat it is preferable that the degree of conicity of the screw-like head and the seat should be the same, for example about 5°. The threads of the screw-like head are moreover sharpened so as to penetrate correctly into the bone and each of them is fairly wide so as to reach correctly the final position. The height of each of the threads of the screw-like head 2 preferably increases with the increase in the angle of conicity of the preparation seat 8 and moreover the pitch of the screw of the head 2, preferably, decreases with an increase in said angle of conicity of the seat 8.

## Claims

1. Dental implant (1), **characterized in that** it comprises a substantially frustoconical shaped screw-like head (2) provided with a series of self-tapping threads (102) and able to be inserted and screwed into a corresponding substantially frustoconical seat (8) formed in the bone (6) of the patient, a collar (4) being formed on the larger-base end of said head (2) and the smaller-base end thereof being provided with a substantially cylindrical shank (5) which is coaxial with said screw-like head (2) and provided with a series of annular grooves (105), said cylindrical shank (5) being able to be inserted inside a corresponding substantially cylindrical seat (7) formed in the bone (6) of the patient, coaxially and below said substantially frustoconical seat (8).

2. Dental implant (1) according to Claim 1, **characterized in that** vertical channels (3) are formed in said screw-like head (2).

3. Dental implant (1) according to Claim 1, **characterized in that** annular spaces of a certain depth are formed between each pair of successive threads (102) on said head (2) so as to allow bone growth between said threads (102) and improve the distribution of the loads.

4. Dental implant (1) according to Claim 1, **characterized in that** said annular grooves (105) form an external profile in the axial cross-section of said cylindrical shank (5) substantially in the form of a sawtooth.

5. Dental implant (1) according to Claim 1, **characterized in that** it is made of metallic materials, such as titanium/aluminium/vanadium alloys, ceramic materials or zirconium-based materials or any other biocompatible material.

6. Dental implant (1) according to Claim 1, **characterized in that** the pitch of the threads (102) on said screw-like head (2) varies from about 0.1 mm to about 3 mm.

7. Dental implant (1) according to Claim 1, **characterized in that** the number of lead threads on said screw-like head (2) is variable from one to eight.
